# EUROPEAN PATENT SPECIFICATION

(11) **EP 3 686 130 B1**
(45) Date of publication and mention of the grant of the patent: **05.04.2023**
(21) Application number: 20152587.0
(22) Date of filing: 20.01.2020
(51) Int. Cl.: B65F 3/14, B60K 15/03, B60K 15/063, B60K 15/07

(54) **SEMI-TRAILER FOR WASTE COLLECTING VEHICLES**
SATTELAUFLIEGER FÜR ABFALLSAMMELFAHRZEUGE
SEMI-REMORQUE POUR VÉHICULES DE COLLECTE DE DÉCHETS

(30) Priority: 22.01.2019 IT 201900000925
(43) Date of publication of application: 29.07.2020
(73) Proprietor: Cos.Eco. Industrie Group S.R.L., 70025 Grumo Appula (BA) (IT)
(72) Inventor: DEBERNARDIS, GIUSEPPE, 70022 ALTAMURA (BA) (IT); FARELLA, FILIPPO, 70022 ALTAMURA (BA) (IT)
(74) Representative: Giuliano, Natalia

(56) References cited:
- WO-A1-2007/133213
- WO-A1-2017/173379
- WO-A1-2017/205279
- CN-U- 204 587 825
- US-A- 4 548 542
- US-A1- 2012 280 481

## Description

The present invention relates to a semi-trailer of the type comprising the features of the preamble of claim 1, for waste collecting vehicles.

In particular, the present invention relates to a semi-trailer for waste collecting vehicles, and in particular of the type having means for lifting and compacting the waste and connectable to a tractor, and having an autonomous motor.

A semi-trailer comprising the features of the preamble of claim 1 is known from CN 204 587 825 U. WO 2017/205279 A1 discloses yet another semi-trailer comprising a support for fluid storage tanks.

As it is known, for the collection of waste wheeled vehicles equipped with lifting and compacting means are used. Very often in the collection of large quantities of waste, especially in large cities, the collection vehicle has a tractor and a semi-trailer, which is towed.

Known semi-trailers equipped with lifting and compacting means are described in the US patent application US4576540 which describes a compacting device located in front of a closed body of a semi-trailer which receives household or industrial waste and any other low density product by gravity, through an opening formed on the upper part of the body. The semi-trailer includes two mobile compaction means and also includes compaction elements capable of moving on the bottom of the collection compartment, with movement control systems and a system for expelling the content to landfill.

A limitation of the known semi-trailers is that the lifting of the waste bins, their depletion in the body and the compacting of the waste exploit the energy given by diesel engines of the tractor. The vehicles for the collection of known waste therefore consequently present a series of problems related to the tanks and the yield. Furthermore, one of the problems of known waste collection vehicles is the energy consumption associated with the semi-trailers and the compacting phase, the vehicles are usually diesel powered and therefore not cheap.

Purpose of the present invention is to provide a semi-trailer for waste collecting vehicles, equipped with a methane engine which is optimized and independent from the tractor, which shares the lifting and waste compacting means and optimizes the positioning and the anchoring of gas tanks, preferably methane tanks, with low energy consumption.

According to the present invention, a semi-trailer for waste collecting vehicles is provided, as defined in claim 1.

For a better understanding of the present invention, a preferred embodiment is now described, purely by way of non-limiting example, with reference to the attached drawings, in which:
- figures and 1.a and 1.b show respectively a three-dimensional top and bottom view of a semi-trailer for waste collecting vehicles, according to the invention;

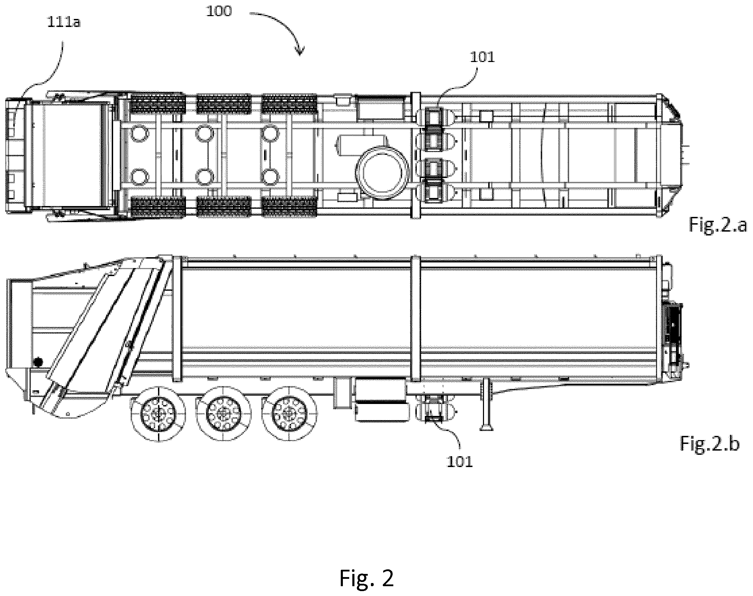

- figures 2.a and 2.b show respectively from the bottom and side perspective views of the semi-trailer for waste collecting vehicles, according to the invention;
- figures 3a-3b show detailed views of portions of the semi-trailer for waste collecting vehicles of figure 2, according to the invention;
- figures 4a-4d show detailed views of a support system for gas tanks of the semi-trailer of Figure 2, according to the invention.

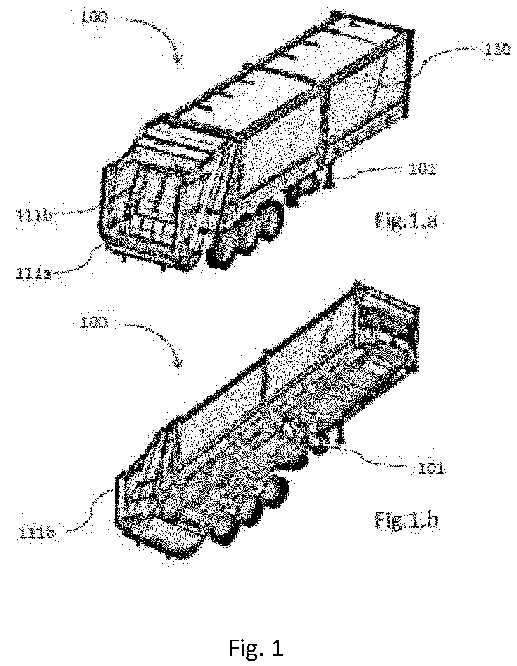

With reference to these figures and, in particular, to figure 1, a semi-trailer for waste collecting vehicles is shown, according to the invention.

More specifically, the semitrailer 100 comprises a collecting main body 110, connectable to a tractor equipped with a traction engine and not shown in the figure, lifting means 111a and compacting means 111b placed at one end of the main body 110, and another engine for moving the lifting means 111a and the compacting means 111b.

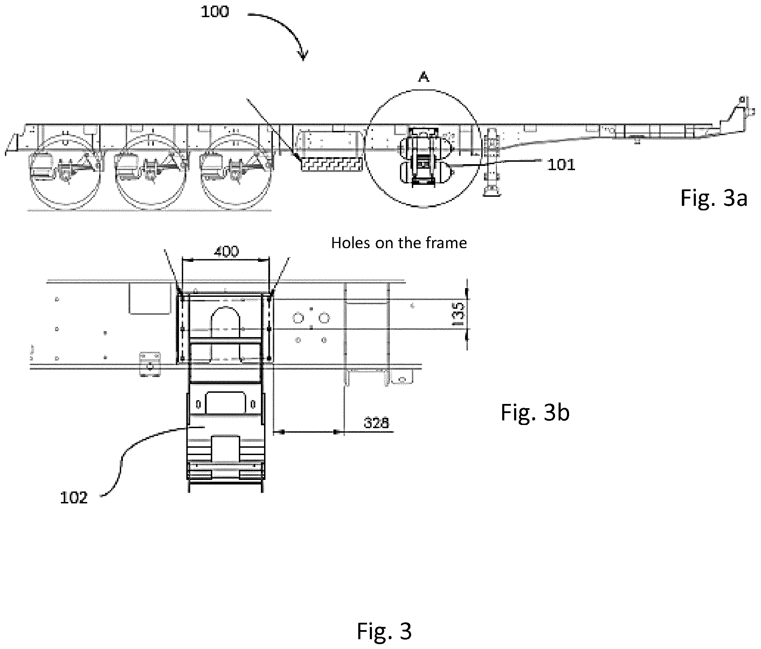

According to an aspect of the invention, the engine for moving the lifting means 111a and the waste compacting means 111b is autonomous and powered by fuel, gas or LPG. Preferably the lifting means 111a and the compaction means 111b of the waste are fed with natural gas and for this purpose the semitrailer 100 has at least one support 102, which is better shown in Figure 3b, which acts as a seat for tanks 101.

As shown in Figure 3c, the tanks 101 are housed by means of a first supporting element 102a and a second supporting element 102b having a radius of curvature such as to follow the external circumference of the tanks 101. The second supporting element 102b can be fixed to the first supporting element 102a and has an upper curve surface and a lower curve surface.

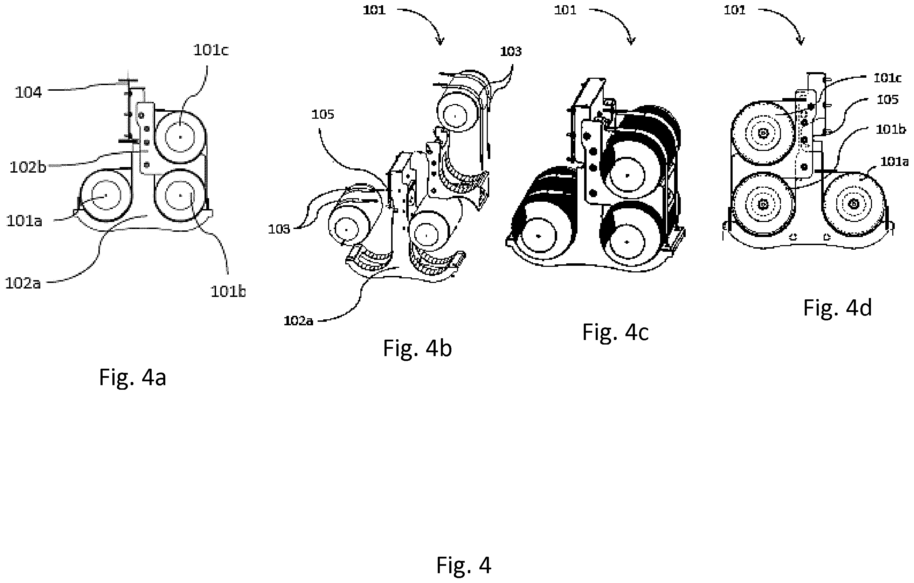

According to an aspect of the invention, there are three tanks 101 which can be housed in each support 102; a first tank 101a and a second tank 101b can be housed in the first supporting element 102a, horizontally oriented, and a third tank 101c is housed on the second supporting element 102b, above the second tank 101b. As shown in Figure 4.a, the first tank 101a and a third tank 101c are each secured by a pair of locking profiles 103.

Advantageously, the profile of the first supporting element 102a and the profile of the second supporting element 102b allow the tanks 101 to be kept safely in right position.

The support 102 advantageously allows the tanks 101 to be released separately from each other.

According to an aspect of the invention, the semitrailer 100 comprises at least four tanks 101 for feeding the fuel to the other engine for feeding the lifting means 111a and the compacting means 111b.

According to an aspect of the invention, the support 102 is connected to the semitrailer 100 in a lower portion thereof by means of a profile 104 shaped as a double T present on the structure of the semitrailer.

According to an aspect of the invention, as shown in Figures 3 and 4, the first supporting element 102a comprises a seat 105 suitable for housing the profile 104 shaped as a double T. The seat 105 allows to fix in a more stable and comfortable way the support 102 to the semi-trailer. In particular, the first supporting element 102a can be fixed to the double T profile 104 by fixing with bolts through a series of holes already present on the frame and holes made on site.

According to an aspect of the invention, a pair of supports 102 are applicable to the semi-trailer 100, on opposite sides of the semi-trailer itself, so as to house six tanks containing methane.

Advantageously according to the invention, the semitrailer 100 is equipped with means for lifting and compacting the waste energetically independent from the tractor.

Finally, the semitrailer for waste collecting vehicles according to the invention is safe, efficient and economic.

It is clear that the semi-trailer vehicles for waste collecting vehicles here described and illustrated can be subject to modifications and variations without thereby departing from the scope of the present invention, as defined in the appended claims.

## Claims

1. Semi-trailer (100) for waste collecting vehicles, comprising:
- a collecting main body (110) able to be connected to a tractor of a waste collecting vehicle provided with an engine;
- waste lifting means (111a);
- compacting means (111b), placed at an end of the main body (110); and
- a further engine able to move the lifting means (111a) and the compacting means (111b), independent and autonomous from the engine of said tractor;
**characterized in that** the semi-trailer further comprises at a lower part at least a support (102) to store tanks (101) containing gas or LPG able to supply said further moving engine, said support (102) comprising a first supporting element (102a) and a second supporting element (102b) able to be fixed to the first supporting element (102a) and having an upper curve surface and a lower curve surface, both of them having a radius of curvature such as the second supporting element (102b) is shaped as an outer circumference of the tanks (101); said tanks (101) comprising a first tank (101a) and a second tank (101b) horizontally placed into the first supporting element (102a) of each support (102), and a third tank (101c) housed on the second supporting element (102b) above the second tank (101b).

2. Semi-trailer (100) for waste collecting vehicles according to claim 1, **characterized in** comprising in a lower portion at least four tanks (101) able to supply said further engine able to move the waste lifting means (111a) and the compacting means (111b).

3. Urban solid waste collecting vehicle provided with a tractor having an engine and with a semi-trailer (100) for waste collecting vehicles, according to one of the claims 1-2.

## Patentansprüche

1. Sattelauflieger (100) für Abfallsammelfahrzeuge,
Bestehend aus:
- Sammelkörper (110), der mit einer Zugmaschine eines Abfallsammelfahrzeugs verbunden werden kann, das mit einem Motor ausgestattet ist;
- Vorrichtung zum Heben von Abfall (111a);
- Verdichtungsvorrichtung (111b), die an einem Ende des Hauptelements (110) angeordnet ist; und
- Einen weiteren Motor, der in der Lage ist, die Hebevorrichtung (111a) und die Verdichtungsvorrichtung (111b) zu bewegen, unabhängig und autonom von dem Motor der Zugmaschine; **dadurch gekennzeichnet, dass** der Sattelauflieger ferner an einem unteren Teil mindestens eine Stütze (102) zum Lagern von Tanks (101) umfasst, die Gas oder LPG enthalten, das in der Lage ist, den sich weiter bewegenden Motor zu versorgen, wobei die Stütze (102) ein erstes Stützelement (102a) und ein zweites Stützelement (102b) umfasst und eine obere gekrümmte Fläche und eine untere gekrümmte Fläche aufweist, die beide einen solchen Krümmungsradius aufweisen, dass das zweite Stützelement (102b) als ein Außenumfang der Tanks (101) geformt ist; wobei die Tanks (101) einen ersten Tank (101a) und einen zweiten Tank (101b) umfassen, die horizontal in dem ersten Stützelement (102a) jedes Trägers (102) angeordnet sind,
- und einen dritten Tank (101c), der auf dem zweiten Stützelement (102b) über dem zweiten Tank (101b) untergebracht ist.

2. Sattelauflieger (100) für Abfallsammelfahrzeuge nach Anspruch 1, **dadurch gekennzeichnet, dass** er in einem unteren Teil mindestens vier Tanks (101) umfasst, die den weiteren Motor versorgen können, der die Hebevorrichtung (111a) und die Verdichtungsvorrichtung (111b) bewegen kann.

3. Städtisches Abfallsammelfahrzeug mit einer Zugmaschine mit Motor und einem Sattelauflieger (100) für Abfallsammelfahrzeuge nach einem der Ansprüche 1 bis 2.

## Revendications

1. Véhicules semi-remorques (100) de collecte des déchets,
comprenant :
- un corps principal pour la collecte (110) pouvant être relié à un tracteur de véhicule de collecte des déchets, fourni avec un moteur ;
- un lève-conteneur (111a)
- un mécanisme de compactage (111b), situé à l'arrière du corps principal (110) ; et
- un moteur supplémentaire pour le lève-conteneur (111a) et le mécanisme de compactage (111b), indépendant et autonome du moteur dudit tracteur ;
caractérisés en cela que les semi-remorques comprennent également dans une partie basse au moins un
support (102) pour conserver les réservoirs (101) contenant de l'essence ou du GPL afin de ravitailler ledit moteur, ledit support (102) comprenant un premier élément de support (102a) et un second élément de support (102b) pouvant être attaché au premier élément de support (102a) et doté d'une surface incurvée haute et d'une surface incurvée basse, les deux ayant un rayon d'incurvation telle que le second élément de support (102b) prend la forme de la circonférence externe des réservoirs (101) ; lesdits réservoirs (101) comprenant un premier réservoir (101a) et un deuxième réservoir (101b) posés horizontalement sur le premier élément de support (102a) de chacun des supports (102), et
un troisième réservoir (101c) accueilli par le second élément de support (102b) au-dessus du premier réservoir (101b).

2. Véhicules semi-remorques (100) de collecte des déchets, en accord avec la déclaration 1, **caractérisés par** la présence d'une partie basse contenant au moins quatre réservoirs (101) capables de ravitailler ledit moteur des lèves-conteneurs (111a) et du mécanisme de compactage (111b).

3. Véhicule de collecte des déchets solides, fourni avec un tracteur disposant d'un moteur et d'une semi-remorque (100) pour véhicules de collecte des déchets, selon l'une des déclarations 1-2.
